# EUROPEAN PATENT SPECIFICATION

(11) **EP 3 241 647 B1**
(45) Date of publication and mention of the grant of the patent: **06.02.2019**
(21) Application number: 16380018.8
(22) Date of filing: 03.05.2016
(51) Int. Cl.: B23Q 1/54, B23Q 11/00

(54) **MACHINE TOOL WITH ACTIVE DAMPING SYSTEM**
WERKZEUGMASCHINE MIT AKTIVEM DÄMPFUNGSSYSTEM
MACHINE-OUTIL AVEC SYSTÈME D'AMORTISSEMENT ACTIF

(43) Date of publication of application: 08.11.2017
(73) Proprietor: Soraluce, S.Coop., 20570 Bergara (Guipuzcoa) (ES)
(72) Inventor: Aizpurua, Iker Mancisidor, 20870 Elgoibar (Guipuzcoa) (ES); Zugasti, Javier Mendizabal, 20570 Bergara (Guipuzcoa) (ES); Gorostidi, Jokin Muñoa, 20870 Elgoibar (Guipuzcoa) (ES)
(74) Representative: Cabinet Plasseraud

(56) References cited:
- EP-A1- 2 517 823
- EP-A2- 1 001 184
- ES-A1- 2 425 994

## Description

### Field of the Art

The present invention relates to eliminating or attenuating the vibrations produced during machining processes in machine tools, such as milling machines, boring machines, or vertical lathes, incorporating a cantilevered moving element holding a working tool (ram). The invention proposes a machine tool with an active inertia damping system located inside the ram in proximity to the cutting area, without the damping system projecting out from the ram and the invention solving the space problems occurring inside the ram.

### State of the Art

In recent years the machine tool sector has evolved towards solutions which allow achieving higher productivity, improving the quality of the obtained parts and saving in costs. In this sense, the attenuation or elimination of the self-regenerative vibrations or chatter during machining is very important.

The mechanical structures of machine tools tend to vibrate during machining operations. Consequently, in some processes, self-regenerative vibrations may be generated, which can be detrimental to the surface quality of the end part and for the integrity of the components of the machine itself, and furthermore, can cause early wear of the cutting tool, or even cause it to break.

Machine tools equipped with cantilevered moving elements, such as milling machines, boring machines, or vertical lathes, for example, incorporating a ram, have a highly variable dynamic response. The inertia and flexibility of the ram cause the variation of the response of the machine depending on the position where the ram is located. Therefore the response of the machine against both static and dynamic forces changes with the working position of the ram. That being the case, when the tool interacts against the part during the cutting process, the machine behaves very differently depending on the position of the ram, producing major variations in the cutting capacity of the machine.

The use of active and passive dampers is known for damping vibrations. Passive dampers consist of a suspended mass attached to the structure to be damped by means of a damped flexible attachment. The natural frequency of the passive damper is fine-tuned so that it coincides with the natural frequency of the structure to be damped. However, these passive dampers become less effective when the dynamic parameters of the structure to be damped vary: therefore they are not very effective for the case of machines having variable dynamics, since they require a different fine-tuning depending on the working position. Furthermore, in order to achieve certain effectiveness, the system is usually excessively bulky and its integration in the machine is very difficult.

Active dampers are capable of adapting to dynamically changing environment. These dampers are made up of sensors which measure the produced vibration and actuators that allow introducing a force opposing the vibration, thereby generating the damping effect. In the case of active inertia dampers, this force is obtained by accelerating a moving mass that is suspended in the structure to be damped, such that when the moving mass is accelerated in the required direction, an inertial force reducing the vibration amplitude in the machine tool is generated. Thus, for example, the article published in 1970 by Cowley and Boyle discloses the use of a system measuring vibration by means of an accelerometer and generating a set point which is introduced in an inertial actuator producing the damping effect on the structure of a machine tool. "Cowley, A.; Boyle, A.; Active dampers for machine tools; Annals of the CIRP, vol. 18, pp. 213-222, 1970*".*

It is also known that in order to most effectively reduce the regenerative effect of chatter, the damping system must be as close as possible to the cutting point. Therefore it must be located at the free end of the ram which is closer to the head where the tool is housed. However, proximity to the cutting head limits the available space for locating the inertial actuator since other elements, such as the drive spindle of the machine, the rear shaft of the machining head (see ES2531563T3), the cooling hoses, power supply, and signal cables of the head are located in that area, which makes the incorporation of active dampers inside the ram complicated. Furthermore, the active dampers also require independent wiring to receive the power supply and control signals, and in some cases they require receiving cooling fluid, which even more complicates their incorporation inside the ram.

These problems mean that in order to house a damper inside the ram, the simplest thing would be to place it away from the cutting point. In this way, however, damping efficiency is lost, or the overall dimensions of the ram must be increased in order to generate space, which involves another series of drawbacks related to cost and use of the machine, resulting from a greater likelihood of interference with the part to be machined.

As a result, the existing solutions for incorporating a damping system at the free end of the ram of a machine tool have located the dampers outside the ram, as seen, for example, in patent document US6296093B1, which externally increases the dimensions of the ram, and therefore the interference probability during machining, due to possible collisions between the ram and other portions of the machine tool, or between the ram and the part to be machined; furthermore, the damper is exposed to external conditions of machining.

Spanish patent document ES2425994, belonging to the same applicant as the present invention, discloses a milling machine tool incorporating an active damper inside the cutting head. Although this solution allows improving the dynamic working behavior of the machine, since the damping of the vibrations occurs very close to the cutting point, i.e., close to the point where the force generating vibrations is generated, since the cutting head is a moving part that rotates with respect to the ram, it is complicated and expensive to get through the feed, control and cooling signals.

EP1001184A2 discloses a machine tool according to the preamble of claim 1.

As a result of the foregoing, a simple and effective solution that allows incorporating an active damping system inside the ram, taking up the least possible space and located as close as possible to the cutting point, is required.

### Object of the Invention

According to the invention, a machine tool equipped with a ram, such as a milling machine, boring machine, or vertical lathe, for example, having an active damping system housed inside the free end of the ram that is close to the cutting tool, is proposed.

The machine tool of the invention comprises a ram having a hollow prismatic structure with longitudinal walls, a volumetric body which is housed at the free end of the ram, inside the hollow prismatic structure of the ram, and at least one damper which is located in proximity to the free end of the ram. The damper comprises a first portion which is housed in an opening of a longitudinal wall of the ram, and a second portion which is housed inside the hollow prismatic structure of the ram, in a gap defined between the volumetric body and the longitudinal wall of the ram in which the first portion of the damper is housed. An active damping system inside the ram taking up minimal space and located as close as possible to the cutting point is thereby incorporated.

The first portion of the damper has a cover with a smooth surface which is aligned with the outer face of the longitudinal wall of the ram in which the damper is housed. Nevertheless, it is possible for the damper itself to act as a cover, such that the first portion of the damper has an outer surface which is aligned with the outer face of the longitudinal wall of the ram in which the damper is housed.

According to a first embodiment of the invention, the first portion of the damper has a peripheral flange seated on a stepped conformation of the opening, wherein the peripheral flange is fixed to the stepped conformation of the opening by attachment means.

According to a second embodiment of the invention, the first portion of the damper is fixed to the inner wall of the opening by attachment means.

According to a third embodiment of the invention, the damper has a conical shape fitting in a reciprocal conformation of the opening, such that the damper is attached by fitting it in the opening of the longitudinal wall of the ram.

According to a fourth embodiment of the invention, the second portion of the damper has a peripheral flange seated on the inner face of the longitudinal wall of the ram in which the damper is housed, wherein the peripheral flange is fixed to the inner face of the longitudinal wall by attachment means.

This being the case, the damper is housed inside the ram as close as possible to the cutting point and attached to the structure of the ram. The damper can act generating an inertial force in the direction corresponding to the oscillating direction of the ram and attenuating the self-regenerative effect of vibration which may occur during machining, depending on the circumstances. Furthermore, since the damper is housed inside the ram, the damper itself is protected against being affected by elements in the surrounding area such as chips, oils, greases, cooling fluids, etc. In addition, since the damper is housed in the opening of the longitudinal wall of the ram, more space is achieved inside the ram, and the lower portion of the second portion of the damper is free to be able to connect the feed, cooling hoses, and signal cables required for damper operation.

A machine tool providing an active damping system inside the ram in a simple and effective way is thereby obtained.

### Description of the Drawings

Figure 1 shows an embodiment of a milling machine tool according to the state of the art.
Figure 2 shows a longitudinal section view of the free end of the ram from the preceding figure.
Figure 3 shows a longitudinal section view of the free end of the ram of a milling machine tool according to the invention, with a damper in the mounting position to be partially housed in an opening of the longitudinal wall of the ram.
Figures from 4 to 7 show embodiments of the attachment of the damper to the longitudinal wall of the ram.
Figure 8 shows a longitudinal section view of the free end of the ram of a boring machine tool.

### Detailed Description of the Invention

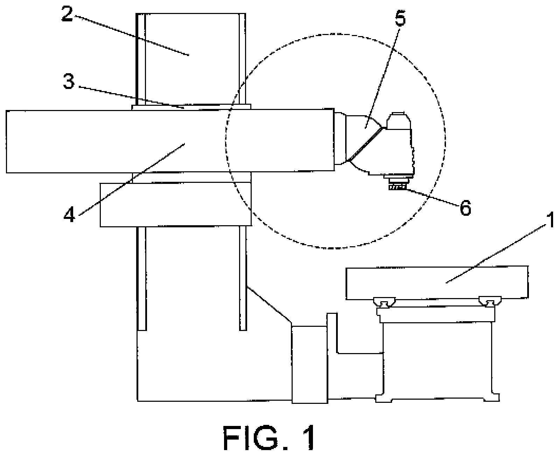

Figure 1 shows a schematic view of an embodiment of a milling machine tool according to the state of the art, comprising a work bench (1) where the part to be machined is located, a column (2), a carriage (3), a ram (4) which is cantilevered with respect to the column (2) and a head (5) with a cutting tool (6), wherein the head (5) is attached to the free end of the ram (4).

The bench (1) or the column (2) can move horizontally, the carriage (3) can travel vertically with respect to the column (2), and the ram (4) can travel horizontally with respect to the carriage (3) and therefore with respect to the column (2). In use, the ram (4) can move between an extended position, in which the ram (4) protrudes with respect to the column (2), and a retracted position, in which only the head (5) protrudes from the column (2), being the ram (4) located inside the column (2).

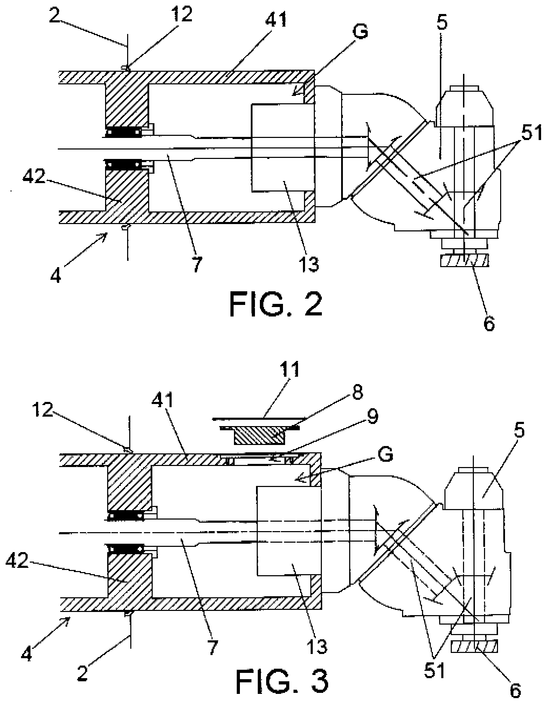

The ram (4) is a part generally made from cast iron or steel having a preferably rectangular hollow prismatic structure, with longitudinal walls (41), having an approximate thickness between 30-50 mm, and with transversal ribs (42) strengthening the structure. As seen in the longitudinal section view of the free end of the ram (4) of Figure 2, the head (5) is coupled to the spindle (7) of the machine tool through a volumetric body (13), commonly referred to as rear shaft of the head (5), such that the spindle (7) transmits movement to the cutting tool (6) through inner shafts (51) of the head (5). Likewise, power supply, control signal and cooling wiring is connected to the head (5) (said wiring is not depicted in Figure 2 for the sake of clarity). The spindle (7) is not an essential element of the invention, since the drive of the rear shaft of the head (5) can be performed by means of the spindle (7) which is coupled to or uncoupled from the rear shaft of the head (5), or by means of a direct drive, such as for example a motor torque, or a motor and a transmission based on pinion-crown gear or worm-crown gear.

The volumetric body (13) is housed inside the hollow prismatic structure of the ram (4), such that the cutting tool (6) of the head (5) can be as close as possible to the column (2) when the ram (4) is in its retracted position. In this way, the working space of the machine is maximized. However, since the volumetric body (13) is inside the ram (4), space inside the ram (4) is limited. Therefore, space inside the ram (4), and mainly the space in the area close to the free end of the ram (4), is primarily occupied by the volumetric body (13) and the power supply, control signal and cooling wiring of the head (5). So that it makes difficult to locate an active damping system inside the ram (4).

To solve these drawbacks, the invention proposes using at least one damper (8, 18, 28, 38) which is partially housed in an opening (9) of a longitudinal wall (41) of the ram (4). The actual thickness of the longitudinal walls (41) is used to house dampers (8, 18, 28, 38) attenuating the possible regenerative effect of vibrations occurring in the ram (4) during machining. Furthermore, the ram (4) of some machine tool models has windows in its longitudinal walls providing access to the volumetric body (13). Said windows are mainly used to perform repairing and maintenance tasks without having to uncouple the head (5) from the ram (4), such that the invention also proposes using said windows as openings (9) for partially housing the dampers (8, 18, 28, 38).

The damper (8, 18, 28, 38) comprises a first portion (81, 181, 281, 381) and a second portion (82, 182, 282, 382). The first portion (81, 181, 281, 381) is housed in an opening (9) of a longitudinal wall (41) of the ram (4), and the second portion (82, 182, 282, 382) is housed inside the hollow prismatic structure of the ram (4), in a gap (G) defined between the volumetric body (13) and the longitudinal wall (41) of the ram (4) in which the first portion (81, 181, 281, 381) of the damper (8, 18, 28, 38) is housed.

The damper (8, 18, 28, 38) is an oblong part having a thickness between 60-80 mm, which is larger than the gap (G) existing between the volumetric body (13) and the longitudinal wall (41) of the ram (4); therefore, since the first portion (81, 181, 281, 381) of the damper (8, 18, 28, 38) is housed in the longitudinal wall (41) of the ram (4), the damper (8, 18, 28, 38) can be located as close as possible to the free end of the ram (4), and therefore to the cutting tool (6) of the head (5), where the vibrations are generated. Thereby, it results in a much more efficient damping system than conventional solutions.

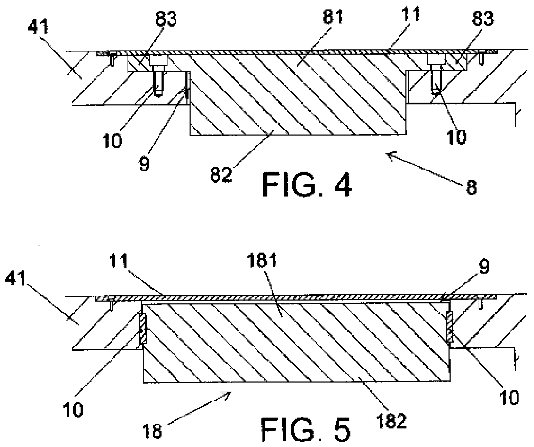

Figure 4 shows a first preferred embodiment of the invention, wherein the first portion (81) of the damper (8) has a peripheral flange (83) defining a step-like conformation seated on a reciprocal stepped conformation of the opening (9). An attachment means (10) is employed to fix the peripheral flange (83) on the reciprocal stepped conformation of the opening (9), such that suitable transmission of the force generated by the damper (8) to the ram (4) is assured.

Figure 5 shows a second embodiment of the invention, wherein the first portion (181) and the second portion (182) of the damper (18) have the same cross-section. In this way, the attachment means (10) fix the smaller sides of the first portion (181) of the damper (18) to the inner wall defining the opening (9).

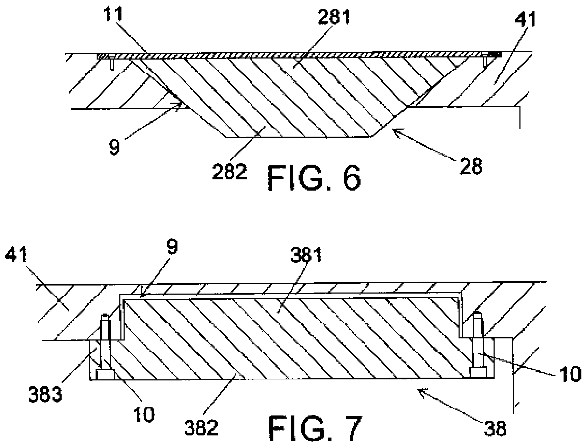

Figure 6 shows a third embodiment of the invention, wherein the damper (28) has a conical shape fitting in a reciprocal conformation of the opening (9). The cross-section of the damper (28) is progressively reduced from the first portion (281) towards the second portion (282) of the damper (28), such that the damper (28) is attached by fitting it in the opening (9).

Figure 7 shows a fourth embodiment of the invention, wherein the second portion (382) of the damper (38) has a peripheral flange (383) projecting with respect to the first portion (381) and defining a step-like conformation seated on the inner face of the longitudinal wall (41). Attachment means (10) fix the peripheral flange (383) to the inner face of the longitudinal wall (41) being used.

As shown in the embodiments of Figures from 4 to 6, the first portion (81, 181, 281) of the damper (8, 18, 28) has a cover (11) in its upper portion closing the opening (9) of the longitudinal wall (41) of the ram (4) where the damper (8, 18, 28) is partially housed. The cover (11) has a smooth surface which is aligned with the outer face of the longitudinal wall (41). Therefore the damper (8, 18, 28) does not project out from the ram (4), which allows the ram (4) to be located integrally in the column (2) when it is in its retracted position. The use of a cover (11) with a smooth surface is advantageous, since the column (2) usually has scraping means (12) removing chips and other elements characteristic of machining when the ram (4) moves towards its retracted position, such that the smooth surface of the cover (11) prevents deterioration of the scraping means (12). Nevertheless, without altering the concept of the invention, it is possible for the first portion (81, 181, 281) of the damper (8, 18, 28) to have a smooth outer surface that is aligned with the outer face of the longitudinal wall (41) in which the damper (8, 18, 28) is housed, thereby also preventing deterioration of the scraping means (12).

The invention has been described for a damper (8, 18, 28, 38) which is housed in a longitudinal wall (41) of the ram (4); nevertheless, the invention can also be applied to a machine tool having other dampers (8, 18, 28, 38) housed in the other longitudinal walls (41) of the ram (4). Therefore, for example, one damper (8, 18, 28, 38) could be arranged for each longitudinal wall (41) of the ram (4). Likewise, Figures from 1 to 3 depict a milling machine tool, although the invention can be applied to another type of machine tools with a ram (4), such as boring machines or vertical lathes, for example.

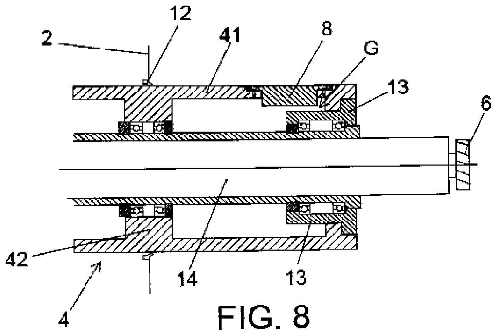

In that sense, Figure 8 shows a longitudinal section of the ram (4) of a boring machine tool with an active damping system. The ram (4) of this type of machines has a quill (14) incorporating the cutting tool (6) at its free end. The quill (14) has a rotational movement corresponding to the cutting movement of the tool (6), and a translational movement with respect to the ram (4) corresponding to the forward movement of the tool (6). Since the quill (14) emerges out with respect to the ram (4), at the inside of the free end of the ram (4) a volumetric body (13) is arranged supporting the quill (14) to prevent the said quill (14) from bending when it emerges from the ram (4). As in the milling machine tool depicted in Figure 2, this volumetric body (13) takes up space in the area close to the free end of the ram (4), making it difficult to plug an active damping system inside the ram (4). In order to avoid this problem, the invention likewise proposes using the damper (8, 18, 28, 38) comprising the first portion (81, 181, 281, 381) which is housed in the opening (9) of a longitudinal wall (41) of the ram (4), and the second portion (82, 182, 282, 382) which is housed inside the hollow prismatic structure of the ram (4) in the gap (G) defined between the volumetric body (13) and the longitudinal wall (41) of the ram (4) in which the first portion (81, 181, 281, 381) of the damper (8, 18, 28, 38) is housed.

## Claims

1. A machine tool with an active damping system, comprising
- a ram (4) having a hollow prismatic structure with longitudinal walls (41);
- a volumetric body (13) which is housed at a free end of the ram (4), inside the hollow prismatic structure of the ram (4); and
- at least one damper (8, 18, 28, 38) which is located at the free end of the ram (4), **characterised in that** the damper (8, 18, 28, 38) comprises a first portion (81, 181, 281, 381) which is housed in an opening (9) of a longitudinal wall (41) of the ram (4), and a second portion (82, 182, 282, 382) which is housed inside the hollow prismatic structure of the ram (4) in a gap (G) defined between the volumetric body (13) and the longitudinal wall (41) of the ram (4) in which the first portion (81, 181, 281, 381) of the damper (8, 18, 28, 38) is housed.

2. The machine tool with an active damping system according to claim 1, **characterized in that** the first portion (81, 181, 281) of the damper (8, 18, 28) has a cover (11) with a smooth surface which is aligned with the outer face of the longitudinal wall (41) in which the damper (8, 18, 28) is housed.

3. The machine tool with an active damping system according to claim 1, **characterized in that** the first portion (81, 181, 281) of the damper (8, 18, 28) has an outer surface which is aligned with the outer face of the longitudinal wall (41) in which the damper (8, 18, 28) is housed.

4. The machine tool with an active damping system according to claim 1, 2 or 3, **characterized in that** the first portion (81) of the damper (8) has a peripheral flange (83) seated on a stepped conformation of the opening (9), wherein the peripheral flange (83) is fixed to the stepped conformation of the opening (9) by attachment means (10).

5. The machine tool with an active damping system according to claim 1, 2 or 3, **characterized in that** the first portion (181) of the damper (18) is fixed to the inner wall of the opening (9) by attachment means (10).

6. The machine tool with an active damping system according to claim 1, 2 or 3, **characterized in that** the damper (28) has a conical shape fitting in a reciprocal conformation of the opening (9), such that the damper (28) is attached by fitting it in the opening (9).

7. The machine tool with an active damping system according to claim 1, **characterized in that** the second portion (382) of the damper (38) has a peripheral flange (383) seated on the inner face of the longitudinal wall (41) in which the damper (38) is housed, wherein the peripheral flange (383) is fixed to the inner face of the longitudinal wall (41) by attachment means (10).

## Patentansprüche

1. Werkzeugmaschine mit einem aktiven Dämpfungssystem, mit:
einem Ausleger (4) mit einer hohlen prismatischen Struktur mit Längswänden (41);
einem volumetrischen Körper (13), der an einem freien Ende des Auslegers (4) innerhalb der hohlen prismatischen Struktur des Auslegers (4) aufgenommen ist; und
mindestens einem an dem freien Ende des Auslegers (4) angeordneten Dämpfer (8, 18, 28, 33);
**dadurch gekennzeichnet, dass**
der Dämpfer (8, 18, 28, 38) einen ersten Abschnitt (81, 181, 281, 381), der in einer Öffnung (9) einer Längswand (41) des Auslegers (4) aufgenommen ist, und einen zweiten Abschnitt (82, 182, 282, 382) aufweist, der innerhalb der hohlen prismatischen Struktur des Auslegers (4) in einem Spalt (G) aufgenommen ist, der zwischen dem volumetrischen Körper (13) und der Längswand (41) des Auslegers (4) definiert ist, in der der erste Abschnitt (81, 181, 281, 381) des Dämpfers (8, 18, 28, 38) aufgenommen ist.

2. Werkzeugmaschine mit einem aktiven Dämpfungssystem nach Anspruch 1, **dadurch gekennzeichnet, dass** der erste Abschnitt (81, 181, 281) des Dämpfers (8, 18, 28) eine Abdeckung (11) mit einer glatten Oberfläche aufweist, die mit der Außenfläche der Längswand (41) ausgerichtet ist, in der der Dämpfer (8, 18, 28) aufgenommen ist.

3. Werkzeugmaschine mit einem aktiven Dämpfungssystem nach Anspruch 1, **dadurch gekennzeichnet, dass** der erste Abschnitt (81, 181, 281) des Dämpfers (8, 18, 28) eine Außenfläche aufweist, die mit der Außenfläche der Längswand (41) ausgerichtet ist, in der der Dämpfer (8, 18, 28) aufgenommen ist.

4. Werkzeugmaschine mit einem aktiven Dämpfungssystem nach Anspruch 1, 2 oder 3, **dadurch gekennzeichnet, dass** der erste Abschnitt (81) des Dämpfers (8) einen Umfangsflansch (83) aufweist, der auf einer abgestuften Konfiguration der Öffnung (9) sitzt, wobei der Umfangsflansch (83) durch eine Befestigungseinrichtung (10) an der abgestuften Konfiguration der Öffnung (9) befestigt ist.

5. Werkzeugmaschine mit einem aktiven Dämpfungssystem nach Anspruch 1, 2 oder 3, **dadurch gekennzeichnet, dass** der erste Abschnitt (181) des Dämpfers (18) durch eine Befestigungseinrichtung (10) an der Innenwand der Öffnung (9) befestigt ist.

6. Werkzeugmaschine mit einem aktiven Dämpfungssystem nach Anspruch 1, 2 oder 3, **dadurch gekennzeichnet, dass** der Dämpfer (28) eine konische Form hat, die in eine reziproke Konfiguration der Öffnung (9) passt, so dass der Dämpfer (28) durch Einpassen in die Öffnung (9) befestigt wird.

7. Werkzeugmaschine mit einem aktiven Dämpfungssystem nach Anspruch 1, **dadurch gekennzeichnet, dass** der zweite Abschnitt (382) des Dämpfers (38) einen Umfangsflansch (383) aufweist, der auf der Innenfläche der Längswand (41) sitzt, in der der Dämpfer (38) aufgenommen ist, wobei der Umfangsflansch (383) durch eine Befestigungseinrichtung (10) an der Innenfläche der Längswand (41) befestigt ist.

## Revendications

1. Machine-outil avec système d'amortissement actif, comprenant
- un vérin (4) ayant une structure prismatique creuse avec des parois longitudinales (41) ;
- un corps volumétrique (13) qui est logé au niveau d'une extrémité libre du vérin (4), à l'intérieur de la structure prismatique creuse du vérin (4) ; et
- au moins un amortisseur (8, 18, 28, 38) qui est situé au niveau de l'extrémité libre du vérin (4),
**caractérisée en ce que**
l'amortisseur (8, 18, 28, 38) comprend une première portion (81, 181, 281, 381) qui est logée dans une ouverture (9) d'une paroi longitudinale (41) du vérin (4), et une seconde portion (82, 182, 282, 382) qui est logée à l'intérieur de la structure prismatique creuse du vérin (4) dans un espacement (G) défini entre le corps volumétrique (13) et la paroi longitudinale (41) du vérin (4) dans laquelle la première portion (81, 181, 281, 381) de l'amortisseur (8, 18, 28, 38) est logée.

2. Machine-outil avec système d'amortissement actif selon la revendication 1, **caractérisée en ce que** la première portion (81, 181, 281) de l'amortisseur (8, 18, 28) comporte un capot (11) avec une surface lisse qui est alignée avec la face externe de la paroi longitudinale (41) dans laquelle l'amortisseur (8, 18, 28) est logé.

3. Machine-outil avec système d'amortissement actif selon la revendication 1, **caractérisée en ce que** la première portion (81, 181, 281) de l'amortisseur (8, 18, 28) a une surface externe qui est alignée avec la face externe de la paroi longitudinale (41) dans laquelle l'amortisseur (8, 18, 28) est logé.

4. Machine-outil avec système d'amortissement actif selon la revendication 1, 2 ou 3, **caractérisée en ce que** la première portion (81) de l'amortisseur (8) comporte une collerette périphérique (83) assise sur une conformation en gradins de l'ouverture (9), dans laquelle la collerette périphérique (83) est fixée à la conformation en gradins de l'ouverture (9) par des moyens d'assujettissement (10).

5. Machine-outil avec système d'amortissement actif selon la revendication 1, 2 ou 3, **caractérisée en ce que** la première portion (181) de l'amortisseur (18) est fixée à la paroi interne de l'ouverture (9) par des moyens d'assujettissement (10).

6. Machine-outil avec système d'amortissement actif selon la revendication 1, 2 ou 3, **caractérisée en ce que** l'amortisseur (28) a une forme conique épousant une conformation réciproque de l'ouverture (9), de sorte que l'amortisseur (28) soit assujetti en épousant l'ouverture (9).

7. Machine-outil avec système d'amortissement actif selon la revendication 1, **caractérisée en ce que** la seconde portion (382) de l'amortisseur (38) comporte une collerette périphérique (383) assise sur la face interne de la paroi longitudinale (41) dans laquelle l'amortisseur (38) est logé, dans laquelle la collerette périphérique (383) est fixée à la face interne de la paroi longitudinale (41) par des moyens d'assujettissement (10).
